# EUROPEAN PATENT SPECIFICATION

(11) **EP 1 453 623 B1**
(45) Date of publication and mention of the grant of the patent: **25.03.2009**
(21) Application number: 02771911.1
(22) Date of filing: 07.11.2002
(51) Int. Cl.: B21D 53/04, F24H 3/10, F28D 9/00, F28F 3/00, F28F 3/04, F28F 3/08

(54) **PATTERNED SHEETS FOR MAKING HEAT EXCHANGERS AND OTHER STRUCTURES**
GEMUSTERTE PLATTEN ZUR HERSTELLUNG VON WÄRMETAUSCHERN UND ANDEREN KONSTRUKTIONEN
FEUILLES A MOTIFS POUR ECHANGEURS DE CHALEUR ET AUTRES STRUCTURES

(30) Priority: 07.11.2001 AU PP870701
(43) Date of publication of application: 08.09.2004
(73) Proprietor: Nepilo Pty Ltd., Montville, QLD 4560 (AU)
(72) Inventor: BOWERS, Geoffrey, Montville, QLD 4560 (AU)
(74) Representative: Sajda, Wolf E.
(86) International application number: PCT/AU2002/001517
(87) International publication number: WO 2003/039786

(56) References cited:
- WO-A-93/00563
- GB-A- 2 008 734

## Description

### Field of the Invention

This invention relates to patterned sheets for making a variety of structures such as heat exchangers, heat pipes and grills.

Although the invention has been developed primarily for making heat exchangers and will be described hereinafter with particular reference to this application, it will be appreciated that the invention is not limited to this particular use.

### Brief Description of the Prior Art

Heat exchangers are often constructed employing a series of tubes arranged to provide a first path for a coolant and a second cross-flow path for a fluid to be cooled. Such a pattern of tubes is difficult to construct and does not lend itself to a modular construction which allows the ready construction of heat exchangers of a variety of sizes.

Some heat exchangers consist of plates or sheets, which may be stacked on top of one another to provide spaces between the sheets through which fluids may pass. An example of such sheets is suggested by United States patent 4,981,621. The sheets of this patent are such that they are not easily attached to one another.

It is an object of the present invention to provide a patterned sheet from which a heat exchanger may be made which at least minimises the disadvantages referred to above or which provides the user with a useful or commercial choice.

Other objects and advantages of the present invention will become apparent from the following description, taken in connection with the accompanying drawings, wherein, by way of illustration and example, some embodiments of the present invention are disclosed.

### Summary of the Invention

According to an aspect of the present invention there is provided a sheet for making a heat exchanger, heat pipe, grill or other structure, the sheet including a repeating three-dimensional pattern on both surfaces thereof, the pattern including a plurality of tapered projections and depressions arranged around a substantially planar central region with at least one of the projections terminating in a substantially planar end, the sheet being stackable with other like sheets such that the planar end of the sheet contacts a planar central region of an adjacent sheet and a repeating pattern of interconnected voids is defined between the adjacent sheets.

Preferably, the projections and depressions alternate around the planar central region.

Preferably, at least one of the projections or depressions is pyramidal.

Preferably, all of the projections terminate in a substantially planar end.

Preferably, the planar central region is polygonal.

Preferably, the projections and depressions are partitioned by grooves and ribs.

A plurality of sheets according to the invention may be used to form a heat exchanger, the sheets being arranged in a stack such that a void is defined between at least one pair of adjacent sheets. The surfaces of the sheets may be hydroscopic so that the stack can be used as an evaporative cooler/humidifier pad.

A pair of sheets according to the invention may be used to form a heat pipe, the sheets being arranged in a stack such that a void is defined between the sheets, the void being at least partially sealed to define a channel.

A plurality of sheets according to the invention may be used to form a grill, the sheets being arranged in a stack such that a void is defined between at least one pair of adjacent sheets. The sheets may be arranged into a plurality of stacks that are joined by at least one of the sheets.

A plurality of sheets according to the invention may be used to form at least one component of an air conditioning unit, the sheets of the component being arranged in a stack such that a void is defined between at least one pair of adjacent sheets. The air conditioning unit may include at least two components joined by at least one of the sheets.

A plurality of sheets according to the invention may be used to form at least one component of an indirect cooling unit, the sheets of the component being arranged in a stack such that a void is defined between at least one pair of adjacent sheets. The indirect cooling unit may include at least two components joined by at least one of the sheets.

A plurality of sheets according to the invention may be used to form at least one component of a heat recovery dehumidifier unit, the sheets of the component being arranged in a stack such that a void is defined between at least one pair of adjacent sheets. The heat recovery dehumidifier unit may include at least two components joined by at least one of the sheets.

A plurality of sheets according to the invention may be used to form at least one component of an air-cooled cooling tower unit, the sheets of the component being arranged in a stack such that a void is defined between at least one pair of adjacent sheets. The air-cooled cooling tower unit may include at least two components joined by at least one of the sheets.

A plurality of sheets according to the invention may be used to form an evaporative cooler, the sheets being arranged in a stack and into a V-formation such that a void is defined between at least one pair of adjacent sheets.

A plurality of sheets according to the invention may be used to form a structure, the sheets being arranged in a stack. The sheets may be arranged into a plurality of stacks that are joined by at least one of the sheets.

### Brief Description of the Drawings

In order that the invention may be more fully understood and put into practice, particular preferred embodiments thereof will now be described with reference to the accompanying drawings, in which:
Fig. 1 is a perspective view of a first embodiment of a pattern according to the invention;
Fig. 2 is a plan view of the pattern illustrated in Fig. 1;
Fig. 3 is a sectional view of the pattern illustrated in Fig. 2 taken along line A-A;
Fig. 4 is a sectional view of the pattern illustrated in Fig. 2 taken along line B-B;
Fig. 5 is a plan view of a second embodiment of a pattern according to the invention;
Fig. 6 is a plan view of a portion of a sheet including a plurality of adjacent patterns of the type illustrated in Fig. 1;
Fig. 7 is a perspective view of the sheet illustrated in Fig. 6;
Fig. 8 is a perspective view of a portion of a stack of sheets of the type illustrated in Fig. 6;
Fig. 9 is an end elevation of the stack illustrated in Fig. 8;
Fig 10 is a side elevation of the stack illustrated in Fig. 8;
Fig. 11 is a perspective view of a flat heat pipe constructed from two stacked sheets of the type illustrated in Fig. 6;
Fig. 12 is a transverse sectional view of the heat pipe illustrated in Fig. 11;
Fig. 13 is a side elevation of the heat pipe illustrated in Fig. 11;
Fig. 14 is a side elevation of an open-ended flat heat pipe constructed from two stacked sheets of the type illustrated in Fig. 6;
Fig. 15 is a perspective view of a stack of sheets of the type illustrated in Fig. 6 which forms part of an air to air thermal recovery unit;
Fig. 16 is a perspective view of an evaporative cooler/humidifier pad constructed from a stack of sheets of the type illustrated in Fig. 6;
Fig. 17 is a perspective view of an integrated air intake and light trap grill constructed from a stack of sheets of the type illustrated in Fig. 6;
Fig. 18 is a front elevation of various components which form part of a multi-flow air conditioning unit and which are constructed from a stack of sheets of the type illustrated in Fig. 6;
Fig. 19 is a front elevation of a portion of the part of the multi-flow air conditioning unit illustrated in Fig. 18;
Fig. 20 is a side elevation of a multi-flow air conditioning unit including the part illustrated in Fig. 18;
Fig. 21 is a side elevation of a combination indirect cooling unit including components that are each constructed from a plurality of stacked sheets of the type illustrated in Fig. 6;
Fig. 22 is a side elevation of a heat recovery dehumidifier unit including components that are each constructed from a plurality of stacked sheets of the type illustrated in Fig. 6;
Fig. 23 is a side elevation of an air-cooled cooling tower unit including components that are each constructed from a plurality of stacked sheets of the type illustrated in Fig. 6; and
Fig. 24 is a plan view of an evaporative cooler constructed from a plurality of stacked sheets of the type illustrated in Fig. 6.

### Detailed Description of the Preferred Embodiments

The invention is concerned with panels or sheets, which may be used to form a variety of structures such as heat pipes, heat exchangers and grills. In addition, the individual structures may be incorporated into other components and apparatus.

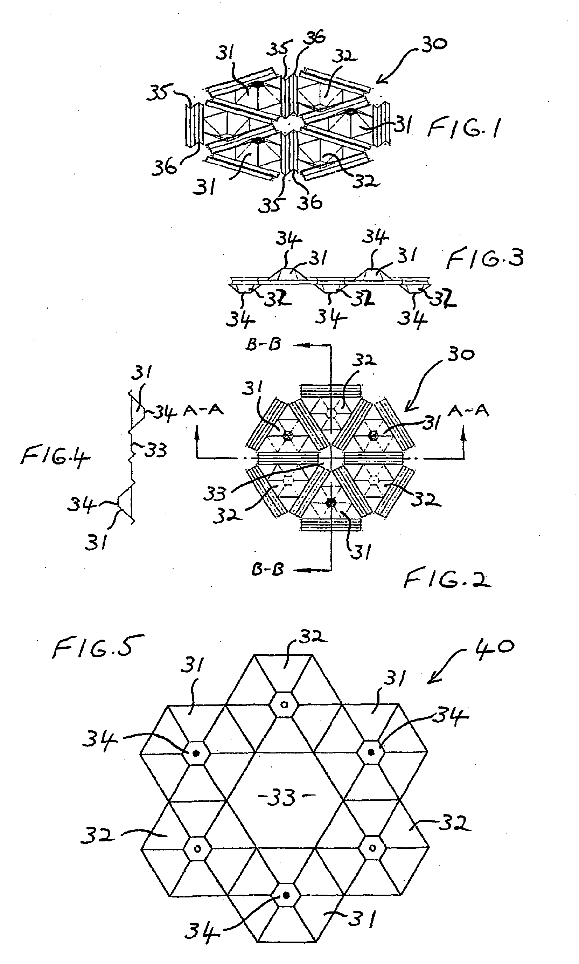

A first embodiment of a repeatable three-dimensional pattern for a sheet is illustrated in Figs. 1 to 4. The pattern, which is designated generally by the numeral 30, includes a plurality of tapered projections 31 and depressions 32 arranged around a planar central region 33 with all of the projections 31 terminating in a planar end 34. Each projection 31 and depression 32 has a hexagonal pyramidal shape.

The projections 31 and depressions 32 are partitioned from each other and from other projections 31 and depressions 32 which are not part of the pattern 30 by grooves 35 and ribs 36. The grooves 35 and ribs 36 also define a triangular pattern around the various projections 31 and depressions 32 such that the planar central region 33 has a hexagonal shape.

A second embodiment of a repeatable three-dimensional pattern for a sheet is illustrated in Fig. 5 and is designated generally by the numeral 40. For convenience, features of the pattern 40 that are similar or correspond to features of the pattern 30 have been identified using the same reference numbers.

The pattern 40 differs from the pattern 30 in that the projections 31 and depressions 32 of the pattern 40 are not partitioned from each other so that the projections 31 and depressions 32 define the planar central region 33.

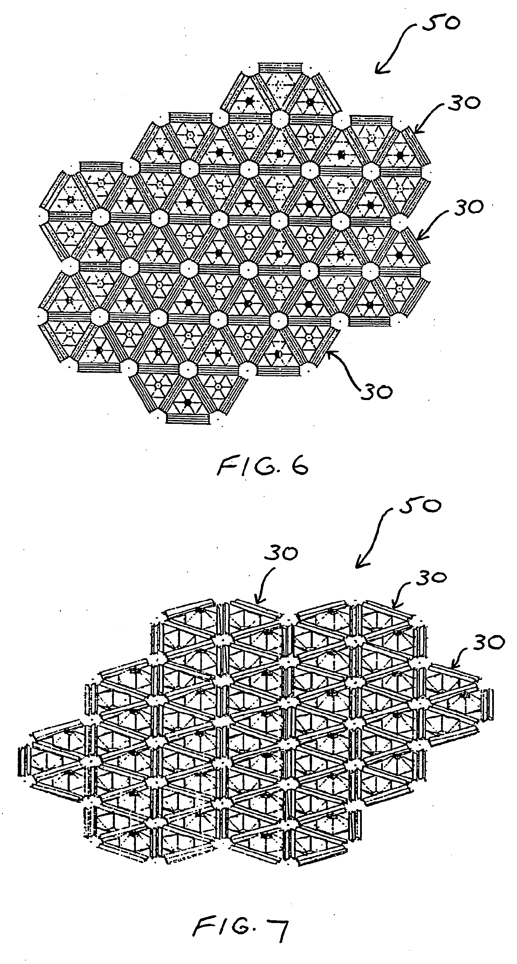

The previously described pattern 30 is repeated to form a multifaceted sheet 50 a portion of which is shown in Fig. 6. A perspective view of the portion of the sheet 50 is shown in Fig. 7. The sheet 50 can be manufactured from any suitable material by any suitable process.

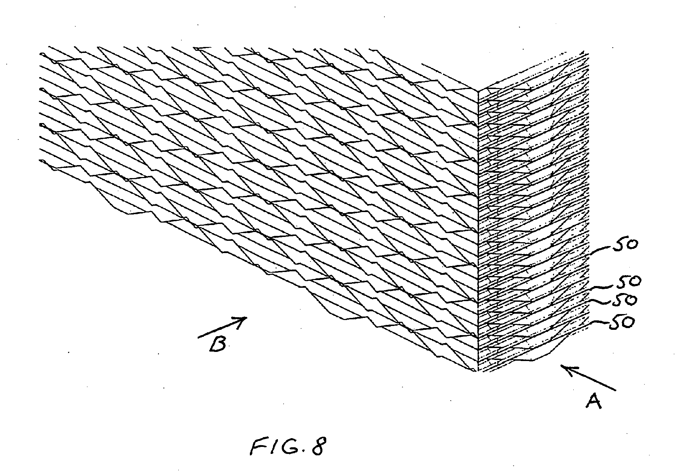

Two or more of the sheets 50 may be stacked on top of one another such that the planar end 34 of a projection 31 of one of the sheets 50 contacts a planar central region 33 of an adjacent sheet 50. This arrangement may be repeated throughout the stack to form a three-dimensional sheet structure like that shown in Figs. 8 to 10. The sheets 50 may be configured to build three-dimensional structures of virtually any size and shape.

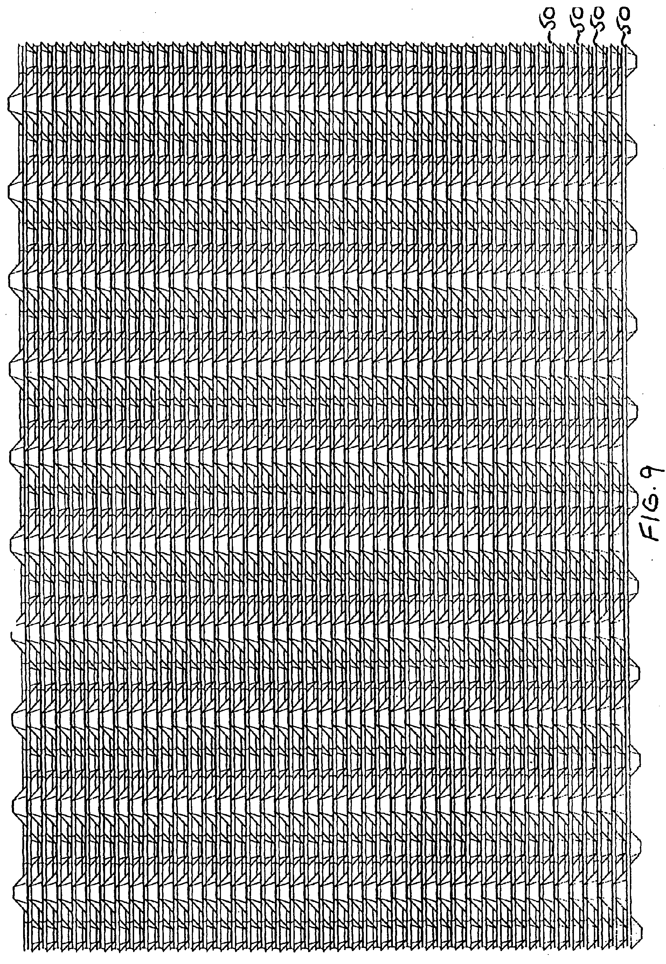

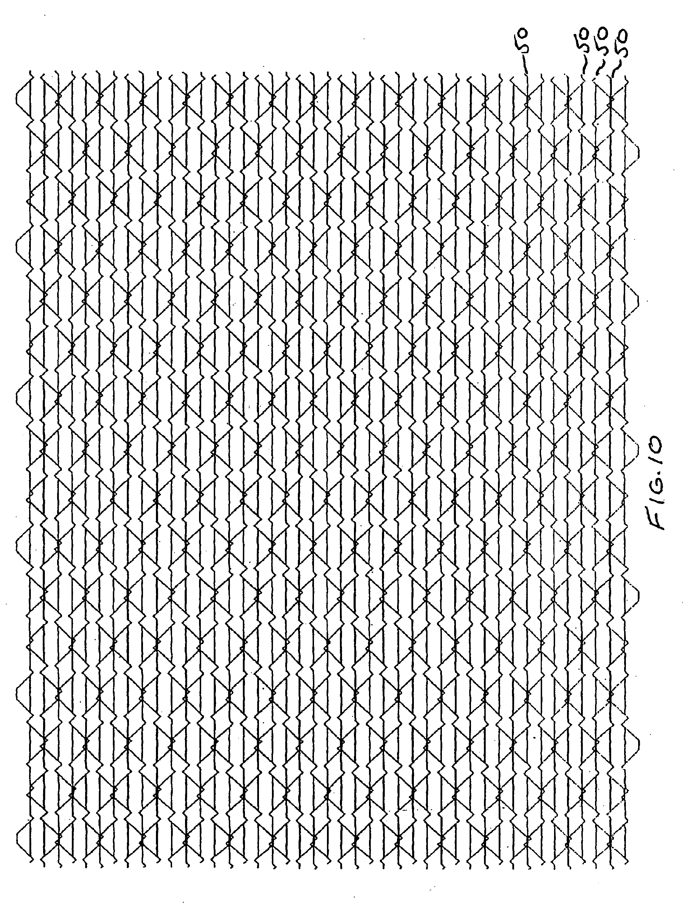

Fig. 9 is an end elevation and Fig. 10 is a side elevation of the stacked sheets of Fig. 8 taken in the direction of arrows A and B, respectively.

The three-dimensional sheet structure of Figs. 8 to 10 is such that a repeating pattern of interconnected voids is created between adjacent sheets 50 of the stack. The voids, which occur across and along the length of the structure, have regular predictable and repeating volumes.

When a stack such as that illustrated in Figs. 8 to 10 is assembled, some 50% of the planar ends 34 come into contact with planar central regions 33. Region 33 is defined by the termination of the grooves 35 and ribs 36 such that the ribs 36 act as a locator which limits the relative lateral movement between the regions 33 and the projections 31 whose planar ends 34 contact the regions 33. This enables the sheets 50 to be built into a stack which is loosely confined by a peripheral framework (not shown) that effectively locks the sheets 50 relative to one another. Alternatively, a framework need not be used and the sheets 50 may be attached to one another at locations where they touch by gluing or welding or by any other suitable manner depending upon the nature of the material used to construct the individual sheets 50. A very strong integrated three-dimensional structure may be created in this manner.

When a plurality of sheets 50 are stacked together in the above-described manner, the repeating pattern of interconnected voids between adjacent sheets 50 creates a uniform distribution of high and low pressure zones for a fluid, such as air, which may pass between adjacent sheets 50. This creates a pulsing effect that enables any air, liquid, vapor or a gaseous medium passing through the low pressure zones to momentarily slow down to allow a ready interaction and exchange of thermal energy between fluids which pass between the sheets 50 and the highly conductive thin-skinned walls of the sheets 50.

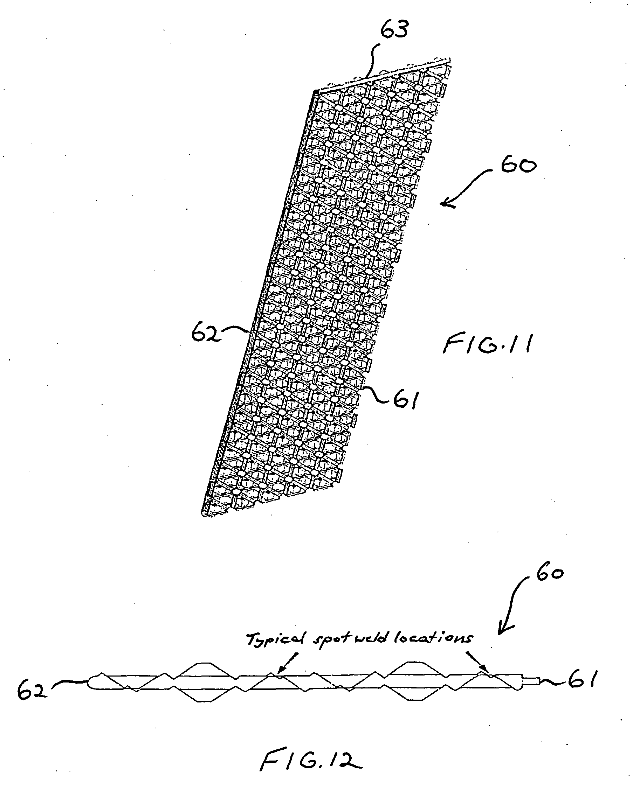

Figs. 11 to 13 illustrate a heat pipe 60 made from two adjacent sheets of the type described above. The pattern of the sheets allows ultrathin and highly thermally-conductive heat pipes 60 of various lengths and widths to be constructed.

To construct the pipe 60 of Figs. 11 to 13, two sheets are brought together so that some 50% of the planar ends 34 contact regions 33. The contacting planar ends 34 and regions 33 may then be attached in any suitable way and the peripheral edges of the pipe 60 may be sealed so that a particularly strong hollow structure is produced which resists becoming distorted owing to various operating conditions such as being evacuated before being partially filled with an operating fluid, or through a pressure buildup of vapor/gases.

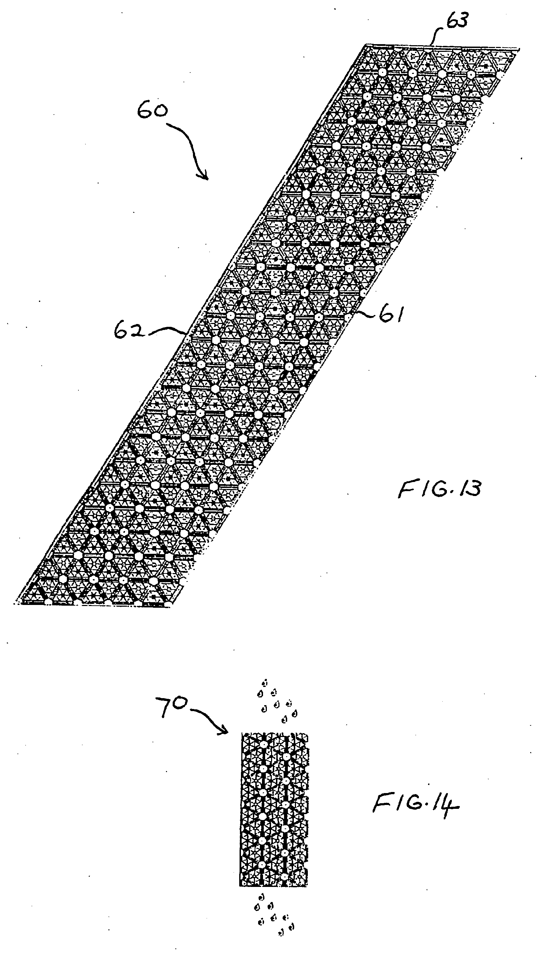

The pipe 60 has a leading edge 61 and a trailing edge 62. The previously described three-dimensional pattern which is repeated throughout the sheets allows the heat pipe 60 to be constructed and operated at a 60° angle of inclination to the horizontal plane as shown in Fig. 13. This configuration creates the leading and trailing edges 61 and 62. The interior of the pipe 60 may be divided into two sections by intermittent strategically placed thin seals extending parallel to the 60° angle of inclination of the edges 61 and 62 and located approximately two-thirds of the distance from the top 63 of the pipe 60. The edges 61 and 62 and the intermittent divisions assist in the operation of the heat pipe 60 which will now be described.

Operating fluid in a lower evaporator part of the pipe 60 attracts and absorbs heat which is transmitted through the walls of the pipe 60. When the operating fluid vaporises, the hot vapor or gas percolates upwardly through the interconnected voids towards an upper condenser part of the pipe 60 such that the vapor is confined by the strategically placed dividing seals. The vapor then progressively condenses back into a liquid while traveling back towards the lower evaporator part of the heat pipe 60 through the interconnected voids and along or adjacent to the trailing edge 61 under the influence of gravity. The sealed divisions together with the interconnected voids prevent congestion occurring between the rising vapor and the returning fluid.

The design of the surface pattern of the sheets governs the performance of the heat pipe 60 and allows for the quick and effective transfer of thermal energy in a vapor/gas form from the lower evaporator part to the upper condenser part of the pipe 60. Also, the surface pattern allows a plurality of heat pipes to be stacked side by side in a vertical configuration and interlocked with each other.

The heat pipe 70 illustrated in Fig. 14 is similar to the previously described heat pipe 60 except the heat pipe 70 does not include any internal dividing seals. Also, the heat pipe 70 is open-end and is configured for vertical use so that a fluid is able to pass through the pipe while a fluid flows over the outside surface of the pipe to cause a thermal transfer to occur between the fluids.

In addition to being used to form a heat pipe, sheets which include the pattern 30 or the pattern 40 may also be used in the construction of other types of heat exchangers such as air to air thermal recovery units and evaporative cooling/humidifying pads.

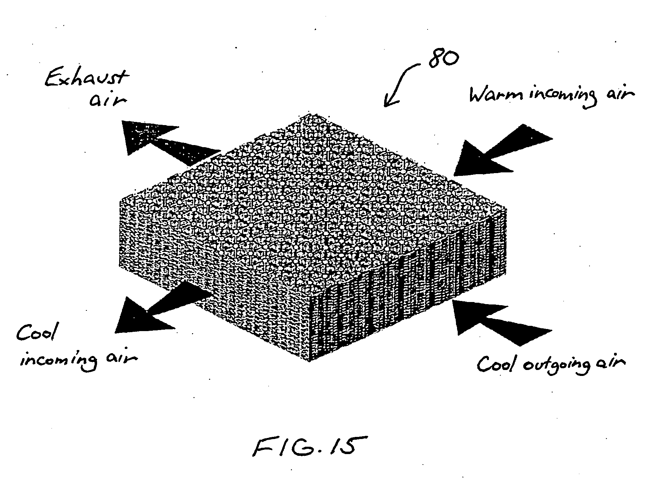

Fig. 15 shows an air to air thermal recovery unit 80 made from a plurality of sheets. The sheets, which are square, are arranged in a stack in the manner previously described in connection with Figs. 8 to 10 so that a repeating pattern of interconnected voids is defined between each pair of adjacent sheets. The various faces of the stack which are defined by the edges of the sheets are partially sealed so that a channel is defined between each pair of adjacent sheets. Each channel extends between opposing faces of the stack such that adjacent channels are perpendicular to each other. This configuration enables two different air streams to be isolated from each other whilst still allowing a thermal transfer to occur between the different air streams through the sheets 81. This is diagrammatically illustrated in Fig. 15 where respective streams of cool outgoing and warm incoming air of a ventilation system are shown flowing through the stack in the directions indicated by the arrows so that a thermal exchange occurs between the two air streams which results in the incoming air being cooled.

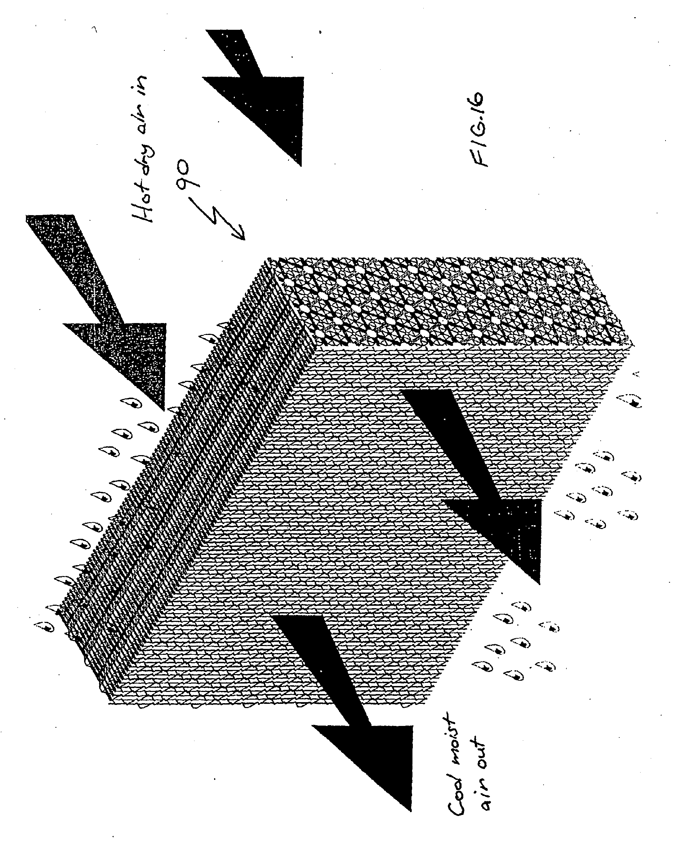

Fig. 16 shows an evaporative cooling/humidifying pad 90 made from a plurality of the sheets. The sheets are stacked in the manner previously described in connection with Figs. 8 to 10 so that a repeating pattern of interconnected voids is defined between each pair of adjacent sheets. The surfaces of the sheets are hydroscopic so that they are able to absorb moisture.

In use, water is supplied across the top of the pad 90 via a water distribution system so that the water passes into the interior of the pad 90 and is distributed across the total surface area of each sheet. When hot dry air is passed through the wet pad 90 evaporative cooling and humidification of the air occurs so that cool moist air is output from the pad 90.

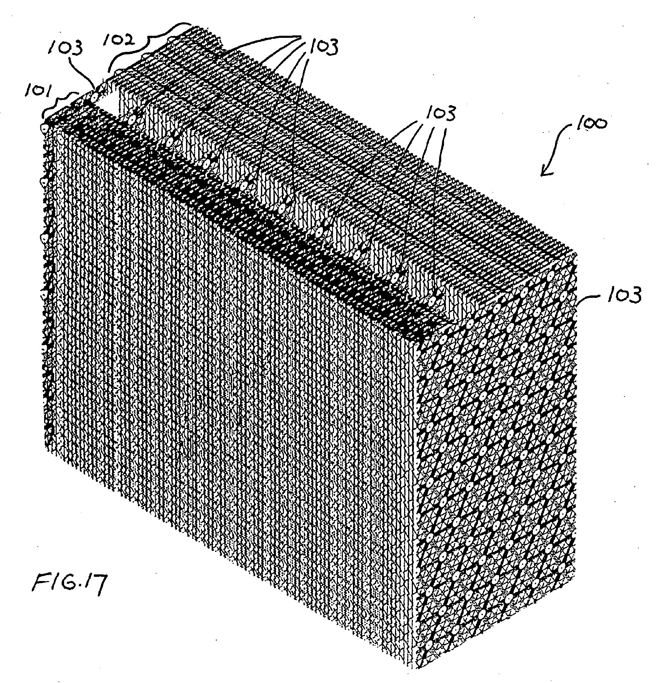

Fig. 17 shows an integrated air intake and light trap grill 100 made from sheets of the type described above. The sheets are stacked in the manner previously described in connection with Figs. 8 to 10 so that a repeating pattern of interconnected voids is defined between each pair of adjacent sheets. The grill 100 consists of a light trap section 101 and an air intake section 102. The sections 101, 102 are joined to each other by sheets 103 common to both sections. Air may pass through both sections and between the patterned sheets which form the sections.

The grill 100 allows air to be taken evenly and uniformly across the whole face area thereof. Also, the construction of the grill 100 ensures that it is weatherproof. Driving rain is prevented from passing through the grill 100 which firstly breaks up the raindrops and then channels the water to the base of the grill where it may be drained away.

The grill 100 is able to operate as a combined, first inline, large particle separator/air intake. The grill 100 is also able to substantially prevent light from passing through it and to straighten a flow of air passing through it with a minimal pressure drop. The grill 100 may for example be used to control ingress of light into chicken coups where artificial light is used to regulate the production of eggs. A cooling pad may be combined with the grill 100 either as a separate unit or as an integrated structure.

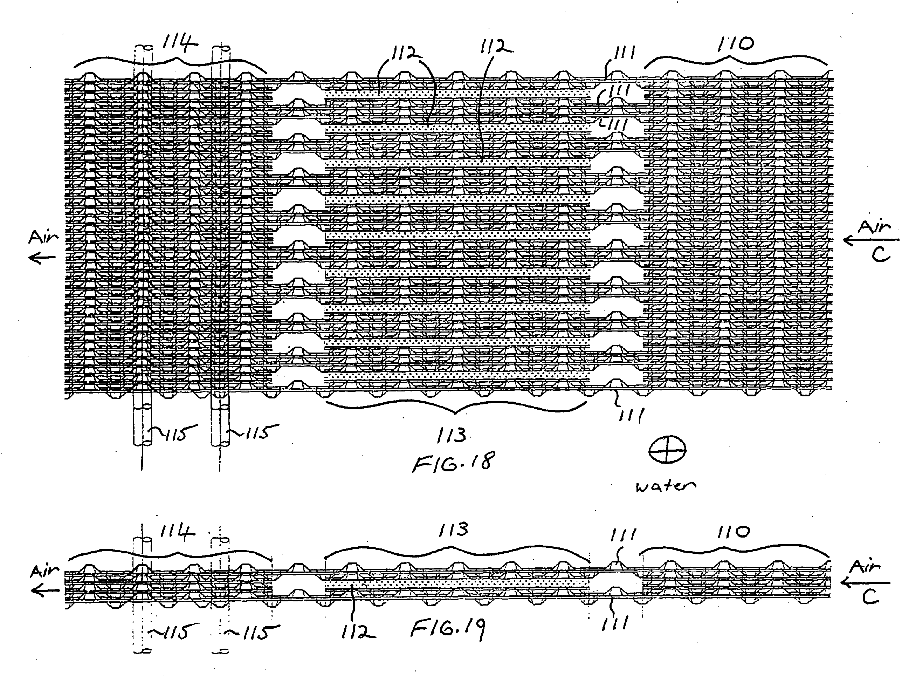

Fig. 18 shows a plan view of part of a multi-flow air conditioning unit formed from sheets of the type described above. The unit has an evaporative cooler section 110 formed by a plurality of the sheets. Water may be caused to pass in a vertical direction between the sheets whilst air may pass in a counter flow direction between the sheets in the direction indicated by arrow C. Some of the sheets (those identified by the numeral 111) extend from one side of the unit to the other and ensure that the unit is presented as an integral structure. These sheets 111 continue through and form part of a stack of side by side heat pipes 112 identified diagrammatically by the dotted regions in a portion 113. These side by side heat pipes 112 are faced-off on opposed sides by sheets which allow the air which passes through section 110 to progress past side faces of the heat pipes 112 in section 113.

The unit has a condenser section 114 through which pipes 115 of a refrigerant system pass. Section 114 is formed by sheets 111 and intermediate sheets through which air introduced at the right hand side of the drawing in the direction of arrow C may freely pass and exit from the unit.

Fig. 19 shows a plan view of a portion of the part of the air conditioning unit shown in Fig. 18.

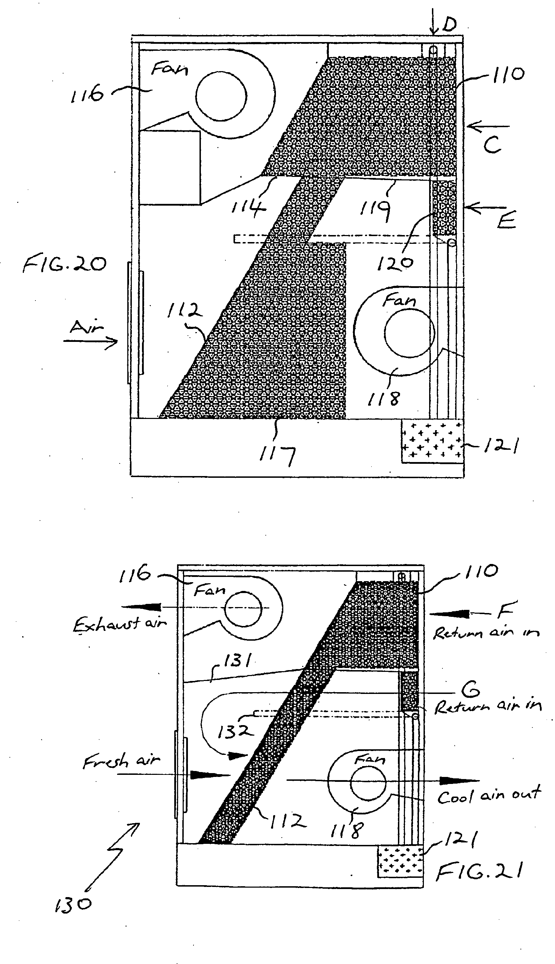

Fig. 20 shows a side elevation of the multi-flow air conditioning unit of Fig. 18. The unit has an evaporative cooling section 110 consisting of a plurality of sheets arranged in a stack. Water may pass between the sheets of the stack in the direction indicated by arrow D whilst air passes between the sheets in the direction indicated by arrow C. A plurality of heat pipes 112 are arranged side by side. The air travels past the heat pipes 112 and exchanges thermal energy with them and then passes over the condenser section 114 before being exhausted by fan 116. Air from outside is drawn across the lower part of the heat pipes 112 and through an evaporator section 117. Some of the sheets which form the evaporator section 117 continue through the stack of heat pipes 112 and form an integral unit with the heat pipes 112. Pipes (not shown) extend through the evaporator 117 and form part of the refrigerant circuit of which pipes 115 (see Fig. 18) are also a part. A fan 118 blows cool air into the space cooled by the air conditioning unit.

Water which percolates through the evaporative cooling section 110 is collected by a tray 119 and passed through a pre-cooler section 120. The pre-cooler section 120 consists of a stack of patterned sheets through which air may pass in the direction of arrow E. Water drops vertically through the section 120 and collects in a reservoir 121 for recirculation.

Fig. 21 shows a combination indirect cooling unit 130 similar in construction to the air conditioning unit of Fig. 20 except that the indirect cooling unit 130 does not have a condenser 114 or an evaporator 117.

Return air passes through the evaporative cooler 110 and the pre-cooler 120 in the directions indicated by arrows F and G. The unit 130 has a partition 131 and a baffle 132. Some of the return air is passed through a stack of heat pipes 112 and mixed with fresh air before being returned into a room by fan 118. The evaporative cooler 110 is used to eject heat from upper sections of the heat pipes 112. Cooling water passes vertically through the evaporative cooler 110 and the pre-cooler 120 before being collected in reservoir 121 for recirculation.

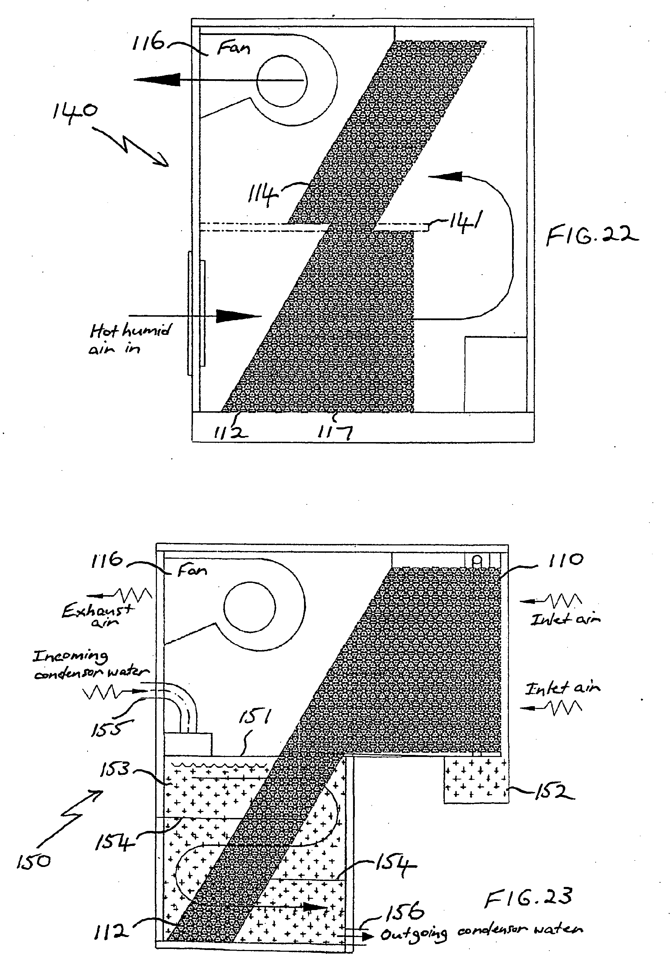

Fig. 22 shows a heat recovery dehumidifier unit 140 constructed using patterned sheets of the invention. The dehumidifier 140 has a stack of heat pipes 112, an evaporator 117 and a condenser 114 as described in relation to Fig. 20. Hot humid air enters and passes over a lower portion of the stack of heat pipes 112 and through the evaporator 117. Moisture in the air is removed by the evaporator 117 and collected at the base of the evaporator 117. Return air is drawn through an upper part of the stack of heat pipes 112 and passed through the condenser 114. Hot dry air is blown out by the fan 116. A baffle 141 extends across the dehumidifier 140.

Fig. 23 shows an air-cooled cooling tower unit 150. The unit 150 is divided into an upper and a lower section by a partition 151. A stack of heat pipes 112 is integrally formed with an evaporative cooler 110. Water which falls through the cooler 110 is collected in a reservoir 152 from which it may be recirculated. Air passes through the cooler 110 and through an upper part of the stack of heat pipes 112. Fan 116 draws air through the pipes 112. A lower portion of the stack of pipes 112 is immersed in a container 153 of water. The container 153 has baffles 154 within it to ensure that the water flows in a circuitous path between an inlet 155 and an outlet 156. Heat from condenser water introduced through the inlet 155 is extracted from the water via the lower sections of the heat pipes 112 and cooled condenser water exits from outlet 156.

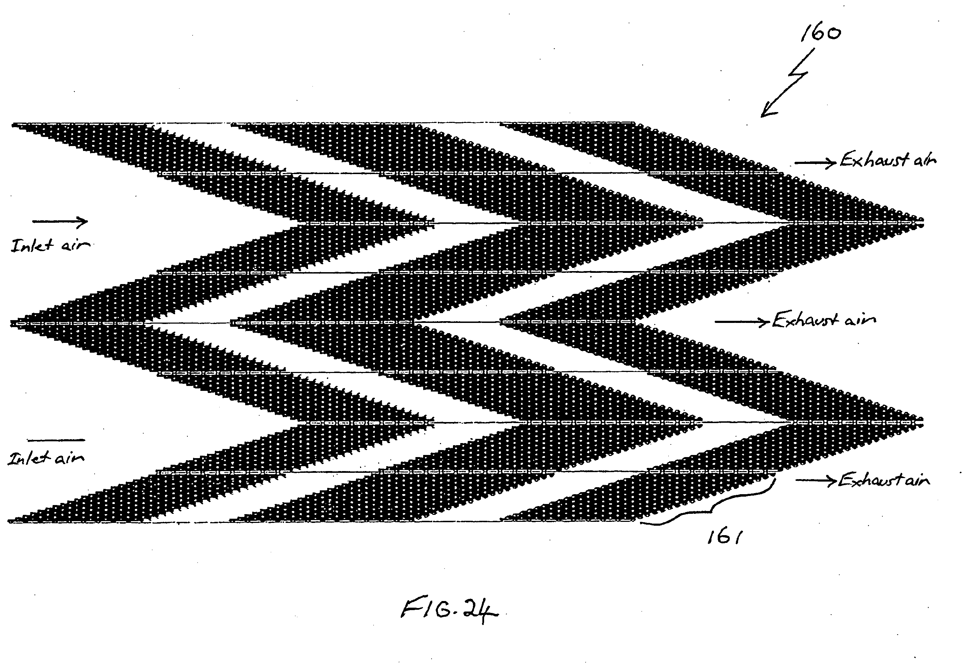

Fig. 24 shows a plan view of an evaporative cooler 160. The cooler 160 consists of sections 161 of staggered pattern sheets arranged in a V-formation. Water is allowed to drop through the spaces between adjacent plates (i.e., into the plane of the page) and may be collected below the sheets. Inlet air is caused to pass between the sheets and cool exhaust air exits from the cooler 160 from the right hand side thereof.

Various other structures can be formed by stacking a plurality of sheets which embody the invention on top of each other. The structures may include more than one stack of sheets and the stacks may be joined together by at least one of the sheets. ,

Although the above discussion has focused on various applications of sheets which include the pattern 30, it will be appreciated that sheets which include a similar repeating arrangement of patterns 50 may be used instead.

In addition to the various uses described above, it is envisaged that the sheets can be used in the transmission, conduction and storage of any kind of thermal heat source including the conversion of sunlight into other types of thermal energy.

The foregoing describes various embodiments and uses of the present invention, and modifications, obvious to those skilled in the art, can be made thereto without departing from the scope of the present invention.

For example, although the projections 31 and depressions 32 of patterns 30 and 40 are shown as being in an alternating arrangement around the planar central region 33, the projections 31 and depressions 32 may be arranged differently.

Also, the projections 31 and/or depressions 32 may be of other pyramidal shapes or may be of non-pyramidal shapes. For example, the projections 31 and/or depressions may be conical.

Further, not all of the projections 31 need to terminate in a planar end 34.

Moreover, the planar central region 33 may have a different shape.

## Claims

1. A sheet for making a heat exchanger, heat pipe, grill or other structure, the sheet including a repeating three-dimensional pattern (30) on both surfaces thereof, the pattern including a plurality of tapered projections (31) and depressions (32) arranged around a substantially planar central region (33) with at least one of the projections (31) terminating in a substantially planar end (34) the sheet being stackable with other like sheets such that the planar end of the sheet (34) contacts a planar central region of an adjacent sheet and a repeating pattern of interconnected voids is defined between the adjacent sheets.

2. The sheet of claim 1, wherein the projections (31) and depressions (32) alternate around the planar central region (33).

3. The sheet of claim 1, wherein at least one of the projections (31) is pyramidal.

4. The sheet of claim 1, wherein all of the projections (31) terminate in a substantially planar end.

5. The sheet of claim 1, wherein at least one of the depressions (32) is pyramidal.

6. The sheet of claim 1, wherein the planar central region (33) is polygonal.

7. The sheet of claim 1, wherein the projections (31) and depressions (32) are partitioned by grooves (35) and ribs (36).

8. A heat exchanger including a plurality of stacked sheets of the type defined by any one of claims 1 to 7, the sheets being arranged such that a void is defined between at least one pair of adjacent sheets.

9. The heat exchanger of claim 8, wherein the surfaces of the sheets are hydroscopic.

10. A heat pipe including a pair of sheets of the type defined by any one of claims 1 to 7, the sheets being arranged in a stack such that a void is defined between the sheets, the void being at least partially sealed to define a channel.

11. A grill including a plurality of stacked sheets of the type defined by any one of claims 1 to 7, the sheets being arranged such that a void is defined between at least one pair of adjacent sheets.

12. The grill of claim 11, wherein the sheets are arranged into a plurality of stacks that are joined by at least one of the sheets.

13. An air conditioning unit including at least one component that includes a plurality of stacked sheets of the type defined by any one of claims 1 to 7, the sheets being arranged such that a void is defined between at least one pair of adjacent sheets.

14. The air conditioning unit of claim 13, including at least two components joined by at least one of the sheets.

15. An indirect cooling unit including at least one component that includes a plurality of stacked sheets of the type defined by any one of claims 1 to 7, the sheets being arranged such that a void is defined between at least one pair of adjacent sheets.

16. The indirect cooling unit of claim 15, including at least two components joined by at least one of the sheets.

17. A heat recovery dehumidifier unit including at least one component that includes a plurality of stacked sheets of the type defined by any one of claims 1 to 7, the sheets being arranged such that a void is defined between at least one pair of adjacent sheets.

18. The heat recovery dehumidifier unit of claim 17, including at least two components joined by at least one of the sheets.

19. An air-cooled cooling tower unit including at least one component that includes a plurality of stacked sheets of the type defined by any one of claims 1 to 7, the sheets being arranged such that a void is defined between at least one pair of adjacent sheets.

20. The air-cooled cooling tower unit of claim 19, including at least two components joined by at least one of the sheets.

21. An evaporative cooler including a plurality of stacked sheets of the type defined by any one of claims 1 to 7 arranged into a V-formation such that a void is defined between at least one pair of adjacent sheets.

22. A structure including a plurality of stacked sheets of the type defined by any one of claims 1 to 7.

23. The structure of claim 22, wherein the sheets are arranged into a plurality of stacks that are joined by at least one of the sheets.

## Patentansprüche

1. Flächenkörper zum Herstellen eines Wärmetauschers, eines Wärmerohrs, eines Gittergebildes oder einer anderen Struktur, wobei der Flächenkörper ein sich wiederholendes dreidimensionales Muster (30) an seinen beiden Oberflächen aufweist, wobei das Muster eine Vielzahl von sich verjüngenden Erhebungen (31) und Vertiefungen (32) aufweist, die um einen im wesentlichen planen zentralen Bereich (33) herum angeordnet sind, wobei zumindest eine der Erhebungen (31) in einem im wesentlichen planen Ende (34) endet, wobei der Flächenkörper mit anderen, gleichartigen Flächenkörpern derart stapelbar ist, daß das plane Ende des Flächenkörpers (34) mit einem planen zentralen Bereich eines benachbarten Flächenkörpers in Kontakt steht und ein sich wiederholendes Muster von miteinander in Verbindung stehenden Hohlräumen zwischen den einander benachbarten Flächenkörpern gebildet ist.

2. Flächenkörper nach Anspruch 1,
wobei die Erhebungen (31) und Vertiefungen (32) in einander abwechselnder Weise um den planen zentralen Bereich (33) herum vorgesehen sind.

3. Flächenkörper nach Anspruch 1,
wobei mindestens eine der Erhebungen (31) pyramidenförmig ist.

4. Flächenkörper nach Anspruch 1,
wobei sämtliche Erhebungen (31) in einem im wesentlichen planen Ende enden.

5. Flächenkörper nach Anspruch 1,
wobei mindestens eine der Vertiefungen (32) pyramidenförmig ist.

6. Flächenkörper nach Anspruch 1,
wobei der plane zentrale Bereich (33) polygonal ist.

7. Flächenkörper nach Anspruch 1,
wobei die Erhebungen (31) und Vertiefungen (32) durch Nuten (35) und Rippen (36) unterteilt sind.

8. Wärmetauscher mit einer Vielzahl von gestapelten Flächenkörpern von dem Typ, die durch einen der Ansprüche 1 bis 7 definiert sind,
wobei die Flächenkörper derart angeordnet sind, daß ein Hohlraum zwischen mindestens einem Paar von einander benachbarten Flächenkörpern gebildet ist.

9. Wärmetauscher nach Anspruch 8,
wobei die Oberflächen der Flächenkörper feuchtigkeitsanziehend sind.

10. Wärmerohr mit einem Paar von Flächenkörpern von dem Typ, die durch einen der Ansprüche 1 bis 7 definiert sind,
wobei die Flächenkörper in einem Stapel derart angeordnet sind, daß ein Hohlraum zwischen den Flächenkörpern gebildet ist, wobei der Hohlraum zum Bilden eines Kanals zumindest teilweise abgedichtet ist.

11. Gittergebilde mit einer Vielzahl von gestapelten Flächenkörpern von dem Typ, die durch einen der Ansprüche 1 bis 7 definiert sind,
wobei die Flächenkörper derart angeordnet sind, daß ein Hohlraum zwischen mindestens einem Paar von einander benachbarten Flächenkörpern gebildet ist.

12. Gittergebilde nach Anspruch 11,
wobei die Flächenkörper in einer Vielzahl von Stapeln angeordnet sind, die durch mindestens einen der Flächenkörper verbunden sind.

13. Klimaanlageneinheit mit mindestens einer Komponente, die eine Vielzahl von gestapelten Flächenkörpern von dem Typ aufweist, die durch einen der Ansprüche 1 bis 7 definiert sind,
wobei die Flächenkörper derart angeordnet sind, daß ein Hohlraum zwischen mindestens einem Paar von einander benachbarten Flächenkörpern gebildet ist.

14. Klimaanlageneinheit nach Anspruch 13,
die mindestens zwei Komponenten aufweist, die durch mindestens einen der Flächenkörper verbunden sind.

15. Indirekte Kühleinheit mit mindestens einer Komponente, die eine Vielzahl von gestapelten Flächenkörpern von dem Typ aufweist, die durch einen der Ansprüche 1 bis 7 definiert sind,
wobei die Flächenkörper derart angeordnet sind, daß ein Hohlraum zwischen mindestens einem Paar von einander benachbarten Flächenkörpern gebildet ist.

16. Indirekte Kühleinheit nach Anspruch 15,
die mindestens zwei Komponenten aufweist, die durch mindestens einen der Flächenkörper verbunden sind.

17. Wärmerückgewinnungs-Entfeuchtereinheit mit mindestens einer Komponente, die eine Vielzahl von gestapelten Flächenkörpern von dem Typ aufweist, die durch einen der Ansprüche 1 bis 7 definiert sind,
wobei die Flächenkörper derart angeordnet sind, daß ein Hohlraum zwischen mindestens einem Paar von einander benachbarten Flächenkörpern gebildet ist.

18. Wärmerückgewinnungs-Entfeuchtereinheit nach Anspruch 17,
die mindestens zwei Komponenten aufweist, die durch mindestens einen der Flächenkörper verbunden sind.

19. Luftgekühlte Kühlturmeinheit mit mindestens einer Komponente, die eine Vielzahl von gestapelten Flächenkörpern von dem Typ aufweist, die durch einen der Ansprüche 1 bis 7 definiert sind,
wobei die Flächenkörper derart angeordnet sind, daß ein Hohlraum zwischen mindestens einem Paar von einander benachbarten Flächenkörpern gebildet ist.

20. Luftgekühlte Kühlturmeinheit nach Anspruch 19,
die mindestens zwei Komponenten aufweist, die durch mindestens einen der Flächenkörper verbunden sind.

21. Verdunstungskühler mit einer Vielzahl von gestapelten Flächenkörpern von dem Typ, die durch einen der Ansprüche 1 bis 7 definiert sind,
wobei die Flächenkörper in einer V-Formation angeordnet sind, so daß ein Hohlraum zwischen mindestens einem Paar von einander benachbarten Flächenkörpern gebildet ist.

22. Struktur mit einer Vielzahl von gestapelten Flächenkörpern von dem Typ, die durch einen der Ansprüche 1 bis 7 definiert sind.

23. Struktur nach Anspruch 22,
wobei die Flächenkörper in einer Vielzahl von Stapeln angeordnet sind, die durch mindestens einen der Flächenkörper verbunden sind.

## Revendications

1. Feuille pour réaliser un échangeur de chaleur, un tube caloporteur, une grille ou une autre structure, la feuille incluant un motif tridimensionnel répétitif (30) sur ses deux surfaces, le motif incluant une pluralité de projections effilées (31) et de dépressions effilées (32) agencées autour d'une région centrale (33) sensiblement plane, de sorte que l'une au moins des projections (31) se termine par une extrémité sensiblement plane (34), la feuille pouvant être empilée avec d'autres feuilles similaires de telle façon que l'extrémité plane de la feuille (34) vient en contact avec une région centrale plane d'une feuille adjacente et qu'un motif répétitif de vides interconnectés est défini entre les feuilles adjacentes.

2. Feuille selon la revendication 1,
dans laquelle les projections (31) et les dépressions (32) alternent autour de la région centrale plane (33).

3. Feuille selon la revendication 1,
dans laquelle l'une au moins des projections (31) est pyramidale.

4. Feuille selon la revendication 1,
dans laquelle toutes les projections (31) se terminent par une extrémité sensiblement plane.

5. Feuille selon la revendication 1,
dans laquelle l'une au moins des dépressions (32) est pyramidale.

6. Feuille selon la revendication 1,
dans laquelle la région centrale plane (33) est polygonale.

7. Feuille selon la revendication 1,
dans laquelle les projections (31) et les dépressions (32) sont séparées par des rainures (35) et des nervures (36).

8. Échangeur de chaleur qui inclut une pluralité de feuilles empilées du type défini par l'une quelconque des revendications 1 à 7,
les feuilles étant agencées de telle façon qu'un vide est défini entre au moins une paire de feuilles adjacentes.

9. Échangeur de chaleur selon la revendication 8,
dans lequel les surfaces des feuilles sont hygroscopiques.

10. Tube caloporteur qui inclut une paire de feuilles du type défini par l'une quelconque des revendications 1 à 7,
les feuilles étant agencées dans un empilement tel qu'un vide est défini entre les feuilles, le vide étant au moins partiellement scellé pour définir un canal.

11. Grille incluant une pluralité de feuilles empilées du type défini par l'une quelconque des revendications 1 à 7,
les feuilles étant agencées de telle façon qu'un vide est défini entre au moins une paire de feuilles adjacentes.

12. Grille selon la revendication 11,
dans lequel laquelle les feuilles sont agencées dans une pluralité d'empilements qui sont joints par l'une au moins des feuilles.

13. Unité de conditionnement d'air qui inclut au moins un composant qui inclut une pluralité de feuilles empilées du type défini par l'une quelconque des revendications 1 à 7,
les feuilles étant agencées de telle façon qu'un vide est défini entre au moins une paire de feuilles adjacentes.

14. Unité de conditionnement d'air selon la revendication 13,
qui inclut au moins deux composants joints par l'une au moins des feuilles.

15. Unité de refroidissement indirect incluant au moins un composant qui inclut une pluralité de feuilles empilées du type défini par l'une quelconque des revendications 1 à 7,
les feuilles étant agencées de telle façon qu'un vide est défini entre au moins une paire de feuilles adjacentes.

16. Unité de refroidissement indirect selon la revendication 15,
incluant au moins deux composants joints par l'une au moins des feuilles.

17. Unité de déshumidification et de récupération de chaleur incluant au moins un composant qui inclut une pluralité de feuilles empilées du type défini par l'une quelconque des revendications 1 à 7,
les feuilles étant agencées de telle façon qu'un vide est défini entre au moins une paire de feuilles adjacentes.

18. Unité de déshumidification et de récupération de chaleur selon la revendication 17,
incluant au moins deux composants joints par l'une au moins des feuilles.

19. Unité-tour de refroidissement refroidie à l'air, qui inclut au moins un composant qui inclut une pluralité de feuilles empilées du type défini par l'une quelconque des revendications 1 à 7,
les feuilles étant agencées de telle façon qu'un vide est défini entre au moins une paire de feuilles adjacentes.

20. Unité-tour de refroidissement refroidie à l'air selon la revendication 19, incluant au moins deux composants joints par l'une au moins des feuilles.

21. Unité de refroidissement à évaporation incluant une pluralité de feuilles empilées du type défini par l'une quelconque des revendications 1 à 7, agencées dans une formation en V de telle façon qu'un vide est défini entre au moins une paire de feuilles adjacentes.

22. Structure incluant une pluralité de feuilles empilées du type défini par l'une quelconque des revendications 1 à 7.

23. Structure selon la revendication 22,
dans laquelle les feuilles sont agencées dans une pluralité d'empilements qui sont joints par l'une au moins des feuilles.
